# EUROPÄISCHE PATENTANMELDUNG

(11) **EP 0 608 724 A2**
(43) Veröffentlichungstag der Anmeldung: **03.08.1994**
(21) Anmeldenummer: 94100496.2
(22) Anmeldetag: 14.01.1994
(51) Int. Cl.: B65H 7/02

(54) **Laufkontrollvorrichtung für bewegte Gegenstände**

(30) Priorität: 23.01.1993 DE 9300919 U
(71) Anmelder: Mathias Bäuerle GmbH, D-78112 St Georgen (DE)
(72) Erfinder: Lehmann, Werner, D-77793 Gutach (DE)
(74) Vertreter: Neymeyer, Franz, Dipl.-Ing. (FH)

(57) **Zusammenfassung**

Die Laufkontrollvorrichtung für über Transportbahnen bewegte, mit einer ebenen, mechanisch abtastbaren Fläche versehene Gegenstände, insbesondere für Papierbogen oder -bahnen, textile Stofflagen oder Stoffbahnen, weist eine Tasteinrichtung als Tastorgan eine in einem ortsfesten Führungskäfig (7) in allen Richtungen frei drehbare und vertikal bewegliche Kugel (8) auf, welche auf den abtastbaren Flächen der bewegten Gegenstände aufliegt und von diesen in Rotation versetzt Diese Kugel (8) ist mit innerhalb ihrer Außenfläche angeordneten, sich über begrenzte Flächenabschnitte erstreckenden, signalgebenden Signalelementen (12, 28) versehen, die wechselweise mit nicht signalgebenden Flächenabschnitten in Umfangsrichtung der Kugel (8) aneinander gereiht sind und die sich unabhängig von der Bewegungsrichtung der abgetasteten Gegenstände (3) an einem elektronischen Signalgeber (13, 29) in Bewegungssignale (20) erzeugender Weise vorbei bewegen.

## Beschreibung

Die Erfindung betrifft eine Laufkontrollvorrichtung für über Transportbahnen bewegte, mit einer ebenen, mechanisch abtastbaren Fläche versehenen Gegenständen, insbesondere von Papierbogen oder -bahnen textilen Stofflagen oder Stoffbahnen, bei der eine Tasteinrichtung ein drehbar gelagertes, auf den abtastbaren Flächen der bewegten Gegenstände aufliegendes und von diesen in Rotation versetztes Tastorgan aufweist, das mit Signalelementen versehen ist, welche durch ihre Drehbewegungen in einem stillstehenden elektronischen Signalgeber elektronische Bewegungssignale erzeugen.

Bei bekannten Laufkontrollvorrichtungen dieser Art werden als Tastorgane drehbar gelagerte Rollen, Räder oder runde Scheiben verwendet, die mit ihrem Eigengewicht und/oder zusätzlich angefedert reibschlüssig auf den ebenen Flächen der bewegten Gegenstände, deren Bewegung überwacht werden soll, aufliegen und die von den bewegten Gegenständen mit einer der Transportgeschwindigkeit entsprechenden Umfangsgeschwindigkeit in Drehung versetzt werden. Die vorzugsweise berührungslos arbeitenden Signalgeber können induktiver Natur sein oder aus opto-elektrischen Einheiten, wie z.B. Lichtschranken, bestehen. Diese bekannten Tastorganen benötigen jedoch eine lagefixierte Drehachse, die möglichst exakt rechtwinklig zur Bewegungsrichtung der Gegenstände ausgerichtet sein muß, damit das Tastorgan keine Richtungsänderung verursachen kann. Ihre funktionsgerechte Installation ist somit umständlich und zeitraubend. Außerdem sind dazu besondere Justiereinrichtungen erforderlich, welche zusätzliche Kosten verursachen.

Bei Papierverarbeitungsmaschinen für Papierbogen können z.B. in Falzmaschinen, in Kuvertiermaschinen, bei Offsetdruckern oder in Papierzuführungseinrichtungen Papierstaus auftreten, die z.B. durch einem ungleichmäßigen Lauf der Maschine, Störungen beim Falzen und/oder beschädigtes Papier verursacht werden können.

Wenn dabei weitere Papierbögen in die das Papier leitenden, antreibenden und/oder bearbeitenden Walzen eingeführt werden, können sich diese verkeilen, so daß das gesamte Walzenwerk einer solchen Maschine geöffnet werden muß, um diese Blätter zu entfernen. Ein solcher Papierstau kann dann bei nicht rechtzeitiger Erkennung des aufgetretenen Fehlers zu einem längeren Stillstand der Maschine führen.

Dieselben Probleme treten bei anderen Maschinen auf, bei denen Materialbahnen bewegt werden. Dabei kann es sich um textile Materialien oder auch um Kunststoffe in Bahnen oder um einzelne Stücke handeln, die längs einer Walzenbahn oder einem Förderband fortbewegt werden.

Der Erfindung liegt die Aufgabe zu Grunde, eine möglichst kleine, raumsparende, leicht ansprechende, Bewegungsimpulse erzeugende Laufkontrollvorrichtung der eingangs genannten Art zu schaffen, deren Tastorgan sich selbsttätig auf jede beliebige Bewegungsrichtung der zu überwachenden Gegenstände einstellt, ohne daß dabei der signalerzeugende Einfluß seiner Signalelemente auf den Signalgeber funktionell beeinträchtigt wird.

Diese Aufgabe wird erfindungsgemäß dadurch gelöst, daß das Tastorgan aus einer Kugel mit ungleicher Masseverteilung besteht, die in einem Führungskäfig frei drehbar geführt ist und die mindestens ein Signalelement aufweist, das in der Drehebene der größten Masseanhäufung der Kugel angeordnet ist und daß der Signalgeber auf der dem Auflagepunkt der Kugel diametral gegenüberliegenden Seite angeordnet und radial auf die Kugel gerichtet ist.

Das als Kugel mit einer ungleichen Masseverteilung ausgebildete Tastorgan, das in einem Führungskäfig frei rotieren kann, hat den entscheidenden Vorteil, daß es sich nach einer kurzen Einlaufzeit von wenigen Sekunden auf einem sich geradlinig bewegenden Untergrund derart ausrichtet, daß der Bereich größter Masse mit maximalem Abstand um eine Drehachse rotiert, die einerseits parallel zur Bewegungsbahn und andererseits rechtwinklig zur Bewegungsrichtung verläuft; d.h. die Kugel rotiert in der Ebene ihrer größten Masseanhäufung. In dieser Rotationsebene liegen auch zwangsläufig der Kugelmittelpunkt und der Auflagepunkt, in dem die Kugel den bewegten Gegenstand berührt. Da sich die Kugel schnell in diese Rotationsebene einschwingt, kann eine konstruktive Rotationsachse entfallen. Gleichzeitig gewährleistet die Verwendung eines Führungskäfigs, in dem sich die Kugel in allen Richtungen frei drehen kann, daß das geführte Material, z.B. Papier, durch das Tastorgan nicht aus der Bewegungsrichtung abgelenkt wird.

Eine weitere, noch vorteilhaftere Lösung der beschriebenen Aufgabe besteht nach Anspruch 11 darin, daß das Tastorgan eine aus einem lichtdurchlässigen Stoff, insbesondere Kunststoff, bestehende Kugel ist, in der als Signalelemente mehrere unterschiedlich reflektierende Reflexionsflächen angeordnet sind, die in allen Drehrichtungen der Kugel in wechselnder Folge aneinandergereiht sind und einen von außen auf die Kugeloberfläche gerichteten Lichtstrahl einer Reflexionslichtschranke unterschiedlich reflektieren.

Diese zweite Lösung hat den Vorteil, daß die Kugel in der einfachsten Ausführungsform aus zwei im Spritzgußverfahren hergestellten Halbschalen z.B. durch Kleben oder Schweißen zusammengefügt werden kann und daß eine solche Kugel in jeder beliebigen Drehrichtung periodische Impulsfolgen erzeugt, solange sie sich dreht. Ein Ausrichten auf eine bestimmte Drehachse ist dabei nicht erforderlich.

Um bei der erstgenannten Lösung nach Anspruch 1 möglichst schnell eine möglichst gleichförmige und ausgerichtete Drehbewegung der Kugel zu erreichen ist die Ausgestaltung der Erfindung nach Anspruch 3 von Bedeutung.

Sowohl fertigungstechnisch als auch funktionell vorteilhafte Ausgestaltungen bezüglich der ungleichen Masseverteilung sind Gegenstand der Ansprüche 4 bis 10, wobei die Anordnung der Materialeinschlüsse bzw. der Materialeinbettungen in einer Mittelpunktsebene der Kugel, d.h. in einer Ebene, die durch den Kugelmittelpunkt verläuft, den Vorteil bietet, daß die Materialeinschlüsse bzw. Materialeinbettungen zugleich als Signalelemente benutzt werden können.

Vorteilhafte Ausgestaltungen der zweiten Lösung nach Anspruch 11 sind Gegenstand der Ansprüche 12 bis 19. Während es bei der Verwendung verspiegelter Reflexionsflächen nach Anspruch 12 möglich ist, sowohl sphärische, d.h. kugelartig gewölbte, Reflexionsflächen nach Anspruch 14 zu verwenden, können die nach Anspruch 13 vorgesehenen Planflächen in der einfachsten und somit billigsten Art unverspiegelt bleiben. Mit den Ausführungsformen nach den Ansprüchen 16 und 17 ergeben sich relativ einfach herstellbare Gußformen für die beiden Kugelhalbschalen und es ist zugleich sichergestellt, daß bei jeder beliebigen Drehrichtung der Kugel periodische Impulsfolgen entstehen, die eine sichere Kontrollfunktion ergeben.

Nachfolgend wird die Erfindung anhand der Zeichnung beispielhaft näher erläutert. Es zeigt:
- Fig. 1: eine Tasteinrichtung in geschnittener Seitenansicht;
- Fig. 2: einen Schnitt II-II aus Fig. 1;
- Fig. 3: die Darstellung der Fig. 2 mit nicht geschnittener Kugel und
- Fig. 4: das Blockschaltbild einer elektronischen Steuerschaltung.
- Fig. 5: die Tastvorrichtung mit einer anderen Kugel als Tastorgan;
- Fig. 6: die Tastvorrichtung der Fig. 5 mit einer anderen Drehlage der Kugel;
- Fig. 7: zwei zu einer Hohlkugel zusammenfügbare Kugelhalbschalen in der Schnittdarstellung VII-VII aus Fig. 8;
- Fig. 8: eine Kugelhalbschale in der Ansicht VIII-VIII aus Fig. 7;
- Fig. 9: die Einzelteile einer aus zwei Kugelhalbschalen und einem Füllkörper bestehenden Kugel teilweise im Schnitt;
- Fig. 10: den Füllkörper aus Fig. 9 in der Ansicht X aus Fig. 9;
- Fig. 11: die aus den drei Einzelteilen der Fig. 9 zusammengefügte Kugel in Seitenansicht und
- Fig. 12: zwei offene Kugelhalbschalen in Stirnansicht mit unterschiedlichen sphärischen Reflexionsflächenformen an deren Innenflächen.

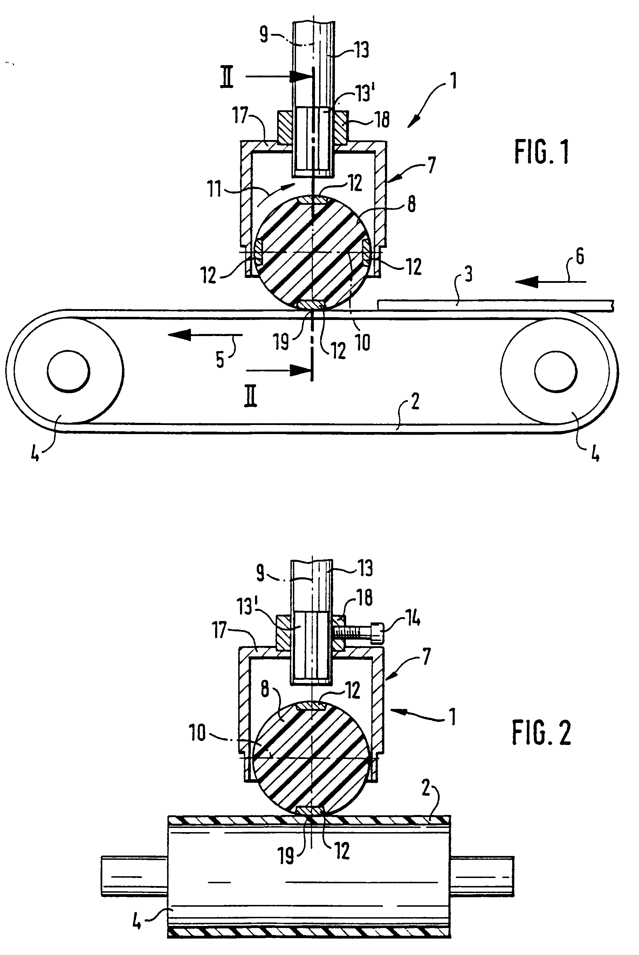

Die in den Fig. 1 bis 3 dargestellte Tasteinrichtung 1 weist als Tastorgan eine Kugel 8 auf, die im Beispiel der Fig. 1 mit ihrem Eigengewicht auf einem Transportband 2 lose jedoch reibschlüssig aufliegt. Dieses Transportband 2 ist über zwei Rollen 4 gespannt. Es ist in Richtung des Pfeils 5 mit einer in der Regel gleichförmigen Transportgeschwindigkeit angetrieben und dient zum geradlinigen Bewegen von Gegenständen 3 in Richtung des Pfeiles 6, die dementsprechend vom Transportband 2 unter dem auf diesem aufliegenden Tastorgan, d.h. unter der Kugel 8, hindurchgeschoben werden, um diese in Drehung zu versetzten.

Bei den Gegenständen 3 kann es sich um Papierbogen, Papierbahnen, textile Materialien oder auch um Kunststoffe in Bahnen oder einzelnen Stücken handeln.

Die oberhalb des Transportbandes 2 angeordnete Tasteinrichtung 1 ist mit einem ortsfesten, zylindrischen oder quadratischen Führungskäfig 7 versehen, in dem die Kugel 8 so geführt ist, daß einerseits reibschlüssig auf dem Transportband 2 bzw. auf den sie passierenden Gegenständen 3 aufliegen und von diesen angetrieben frei rotieren kann. Insbesondere kann sie sich in der Vertikalen entlang der Achse 9 frei bewegen, wenn sie von dem Transportband 2 z.B. auf einen eine gewisse Dicke aufweisenden Papierbogen 3 aufgleitet.

Die Kugel 8 dreht sich dann im wesentlichen um die Drehachse 10, die sich entsprechend der Vorlaufrichtung 5 des Transportbandes 2 in der Horizontalen entsprechend der Drehrichtung 11 selbst einstellt.

Wie nachstehend noch näher erläutert wird, ist die Funktion der Tasteinrichtung 1 unabhängig von der Transportrichtung bzw. von der Drehrichtung 11 der Kugel 8, so daß z.B. ein Papiertransport in jeder beliebigen Transportrichtung überwacht werden kann.

Um dabei einen einzigen ortsfesten, die Drehbewegung der Kugel 8 erfassenden Signalgeber 13 verwenden zu können, ist die Kugel 8 mit einer ungleichen Masseverteilung versehen, in der Weise, daß in einer Radial-oder Mittelpunktsebene der Kugel 8 oder symmetrisch dazu exzentrisch, vorzugsweise in Umfangsnähe mehrere, beispielsweise vier, Materaleinbettungen 12 in Vertiefungen 12' der Oberfläche der Kugel 8 eingelassen sind. Dabei ist unter Radial- oder Mittelpunktsebene eine im Mittelpunkt der Kugel 8 liegende Ebene zu verstehen.

Das Material dieser Einbettungen 12 weist eine größere Dichte auf als das Material der z.B. aus Polyamid bestehenden Kugel 8. Dadurch ergibt sich in der Radialebene, die in Fig. 1 und Fig. 2 mit der Zeichenebene zusammenfällt, ein Bereich der größeren Masseanhäufung, wobei die einzelnen Materialeinbettungen 12 jeweils einen maximalen Abstand vom Kugelmittelpunkt haben. Diese ungleiche Masseverteilung innerhalb der Kugel 8 bewirkt, daß sich die Kugel 8 schon nach kurzer Einlaufzeit auf dem sich bewegenden Transportband 2 bzw. dem Gegenstand 3 derart ausrichtet, daß der Bereich der größten Masseanhäufung mit maximalem Abstand um eine Drehachse 10 rotiert, die sich exakt rechtwinklig zu der Radialebene erstreckt, in welcher die Materialeinbettungen 12 mit der größeren Dichte liegen.
Dabei ist wichtig, daß Anordnung dieser Materialeinbettungen 12 keine Unwucht aufweist, damit die Kugel 8 möglichst leicht und gleichmäßig in Drehung versetzt werden kann.
Da sich die Kugel 8 schnell auf diese Drehachse 10 einschwingt, wird keine konstruktive Mittelachse benötigt. Wichtig ist nur, daß die Kugel 8 horizontal in allen Richtungen leicht drehbar geführt ist, was durch den Führungskäfig 7 oder durch einen ortsfesten Ring geschehen kann. Dabei gewährleistet die frei drehbare Lagerung der Kugel 8 den Vorteil, daß die geführten Gegenstände 3 durch die Kugel 8 nicht aus ihrer Bewegungsrichtung 6 abgelenkt werden.

Statt der oder zusätzlich zu den in der Kugeloberfläche abschließenden Materialeinbettungen 12 könnten zur Erzeugung der ungleichen Masseverteilung auch Materialeinschlüsse mit einer höheren Dichte vorgesehen sein, welche an der Kugeloberfläche nicht sichtbar sind.

Die Materialeinbettungen 12 können als Signalelmente ausgebildet sein und z.B. aus ferromagnetischem Material, vorteilhafter jedoch aus Permanentmagneten bestehen, die in der Lage sind in einer in einem Signalgeber 13 angeordneten Induktionsspule 13' Bewegungssignale zu erzeugen. Dieser Signalgeber 13 ist in der oberen Stirnwand 17 des Führungskäfigs 7 mittels einer Buchse 18 und einer Befestigungsschraube 14 so angeordnet, daß seine Achse 9 sowohl durch den Kugelmittelpunkt als auch durch den Auflagepunkt 19 der Kugel 8 auf dem Transportband bzw. des Gegenstands 3 verläuft. Dadurch ist sichergestellt, daß sich die Materialeinbettungen 12 bei jeder Drehrichtung der Kugel 8 in geringstem Abstand, d.h. mit der größten Wirksamkeit am Signalgeber 13 vorbei bewegen und die gewünschten Bewegungssignale in Form von Spannungsimpulsen erzeugen.

Wenn in einem solchen Signalgeber die Bewegungssignale bei laufender Maschine oder Tranportvorrichtung ausbleiben, bedeutet dies, daß die Kugel 8 auf einem stillstehenden Gegenstand aufliegt und daß an dieser Stelle ein Stau bzw. eine Laufstörung vorliegt. Mit dem Ausbleiben der Bewegungssignale kann auf einfache Weise mit an sich bekannten elektronischen Mitteln ein Abschaltsignal für die Verarbeitungsmaschine erzeugt werden.

Mit der Befestigungsschraube 14 ist der Abstand des Signalgebers 13 von der Kugel 8 einstellbar.

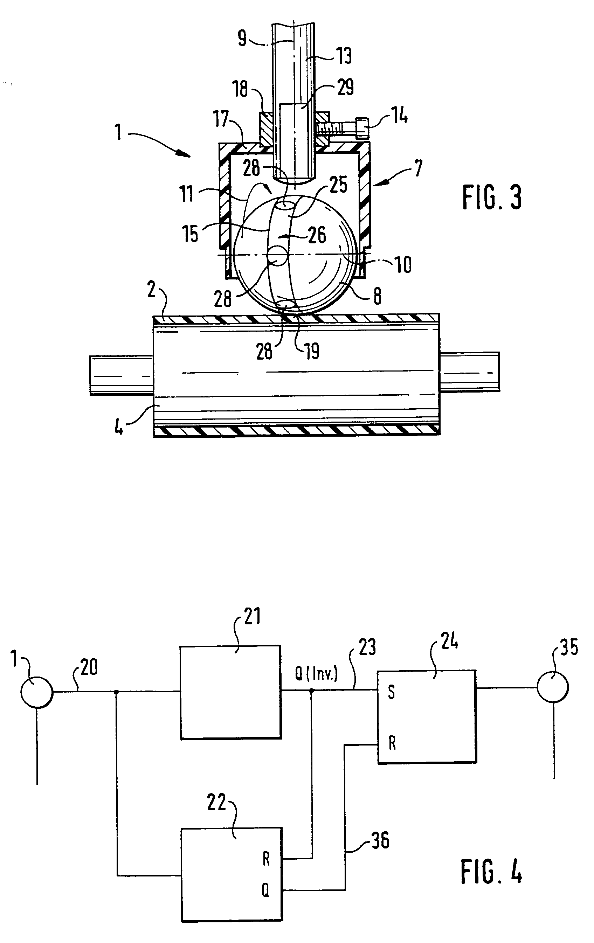

Anstelle einer induktiven Signalerzeugung ist auch der Einsatz einer opto-elektrischen Signalerzeugung möglich. Dazu sind auf der Kugeloberfläche in der Radialebene der größten Masseanhäufung optisch abtastbaren Signalelemente in Form von Oberflächenabschnitten vorzusehen, die sich in ihrer Reflexfähigkeit von der restlichen Oberfläche der Kugel 8 unterscheiden. Dies kann z.B. dadurch erreicht werden, daß man die Materialeinbettungen 12 mit einer optisch unterscheidbaren Oberfläche versieht oder durch zusätzlichen Aufbringen von lichtabsorbierenden bzw. Licht stärker reflektierenden Flecken, die sich von einer Reflexionslichtschranke 29 abtasten lassen. Der Signalgeber 13 ist dann mit einer solchen auf die Kugel 8 ausgerichteten Reflexionslichtschranke 29 (Fig. 3) ausgerüstet, die in der in der Achse 9 liegenden Radialebene auf die Kugeloberfläche ausgerichtet ist.

Die Fig. 3 zeigt eine Tasteinrichtung 1, bei der die Kugel 8 in der Vorderansicht dargestellt und mit einer in der rechtwinklig zur Drehachse 10 stehenden Radialebene liegenden Umfangsnut 15 versehen ist, die zur Erzeugung einer ungleichen Masseverteilung mit einem Material 26 gefüllt ist, dessen Dichte größer ist als die Dichte des Materials der restlichen Kugel 8.
Das in diese Umfangsnut 15 eingebettete Material 26 ist auf seiner einen Teil der Kugelfläche bildenden ringförmigen Oberfläche 25 mit mehreren kreisförmigen, optisch abtastbaren Flecken 28 versehen, die in der vorstehen beschriebenen Weise zur Erzeugung von Bewegungssignalen in einer Reflexionslichtschranke 29 geeignet sind.
Auch durch diese Anordnung des Materials 26 in der Umfangsnut 15 wird ebenfalls erreicht, daß sich die Kugel 8 um eine Drehachse 10 dreht, die exakt rechtwinklig zu der Radialebene verläuft, in welcher die Umfangsnut 15 liegt.

Die Fig. 4 zeigt ein Blockschaltbild einer elektronischen Steuerschaltung der Tasteinrichtung 1 mit dem Signalgeber 13. Die Tasteinrichtung 1 liefert Bewegungssignale 20 mit einer Frequenz, die sich aus der Anzahl der verwendeten Signalelemente 12, 28 und der Geschwindigkeit des Transportbandes bzw. der vorbei bewegten Gegenstände 3 ergibt. Regelmäßig und gleichförmig laufende Gegenstände 3 führen zu einer bestimmten, relativ großen Taktfrequenz der Bewegungssignale 20. Diese beaufschlagen ein Monoflop 21 und einen Zähler 22.

Beim Einschalten der Maschine weist der invertierte Ausgang 23 des nachtriggerbaren Monoflops 21 einen Eins-Pegel auf, so daß das nachgeschaltete RS-Flip-Flop 24 ein Fehlersignal an seinem Ausgang 35 aufweist. Dann beginnt der Transport der Gegenstände 3. Der Zähler 22 zählt eine voreinstellbare Anzahl von Taktsignalen, z.B. 8, und setzt dann über seinen Ausgang 36 das Flip-Flop 24 zurück, so daß das Fehlersignal erlischt. Durch die nun regelmäßig eingehenden Taktsignale 20 geht der invertierte Ausgang 23 des nachtriggerbaren Monoflops 21 auf den Null-Pegel zurück und der Ausgang 35 des nachgeschalteten RS-Flip-Flops 24 erzeugt kein Fehlersignal mehr.

Wenn der Transport eines gerade abgetasteten Gegenstandes 3 nun stockt oder zum Stillstand kommt, werden die impulsartigen Bewegungssignale 20 unregelmäßig oder sie bleiben ganz aus. Dadurch geht der invertierte Ausgang 23 des nachtriggerbaren Monoflops 21 nach kurzer Zeit auf einen Eins-Pegel und der Ausgang 35 des nachgeschalteten RS-Flip-Flops 24 erzeugt ein Fehlersignal. Gleichzeitig ist der invertierte Ausgang 23 des Monoflops 21 auf den Reset-Eingang des Zählers 22 gelegt, so daß dieser auf Null gesetzt wird und keinen Resetimpuls auslösen kann. Die genannte kurze Zeitspanne entspricht der eingestellten Zeitspanne des Monoflops 21, wobei diese so gewählt wird, daß bei einem ordnungsgemäßen Papiertransport das nächste von den Signalelementen 12, 28 erzeugte Null-Eins-Signal innerhalb der eingestellten Zeitspanne die Auswerteschaltung nach Fig. 4 beaufschlagt. Neben der in der Fig. 4 dargestellten Steuerschaltung sind auch andere Auswerteschaltungen möglich, z.B. die Verbindung von zwei Monoflops, wobei der Zähler 22 durch ein weiteres Monoflop ersetzt wird, welches von dem ersten Monoflop 21 angesteuert wird, und somit nach einer voreingestellten Anlaufzeit das RS-Flip-Flop 24 zurücksetzt.

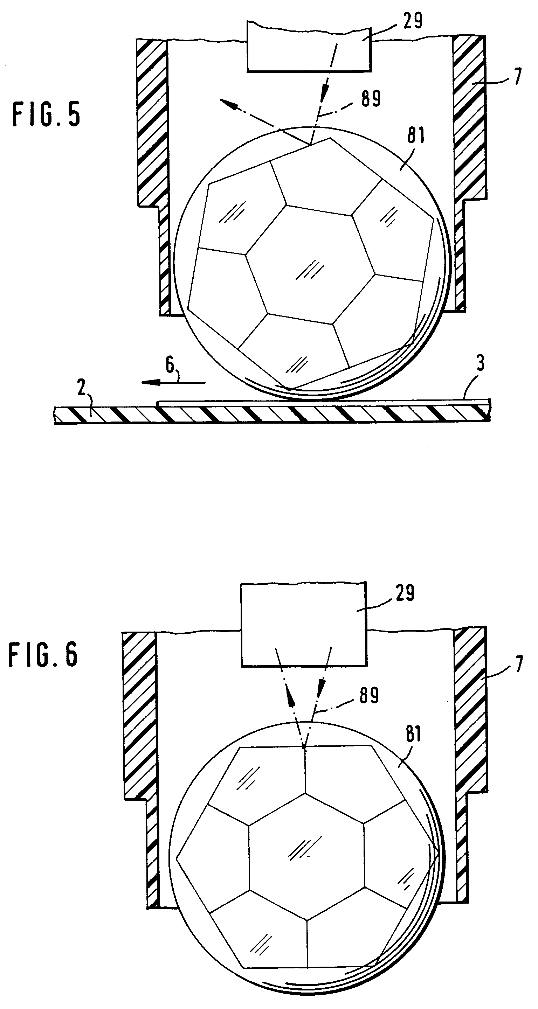

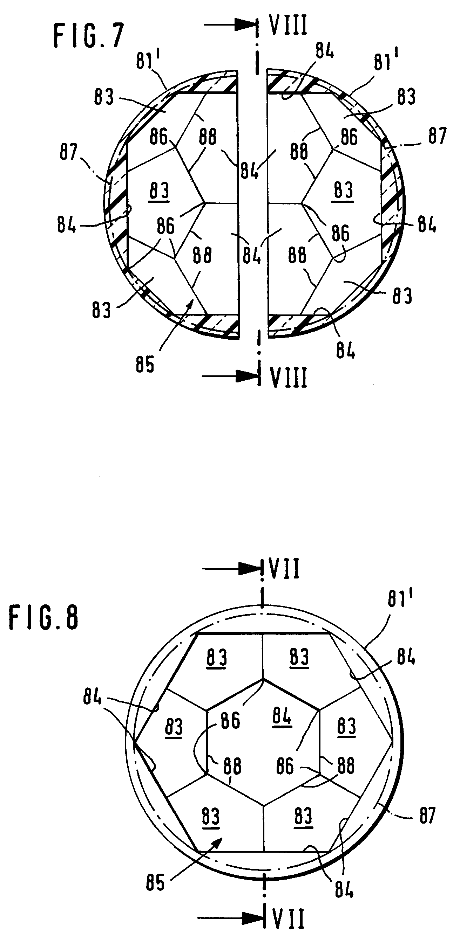

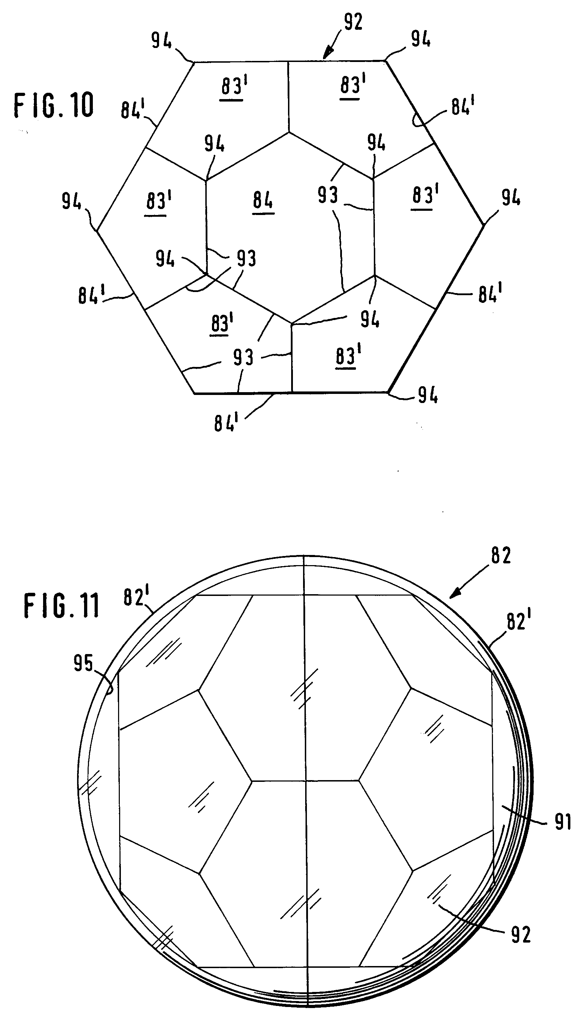

Bei den Ausführungsformen der Fig. 5 bis 11 sind nur andere Kugeln, nämlich Hohlkugeln 81 bzw. 82 als Tastorgane vorgesehen. Die Reflexionslichtschranke 29 und die dazugehörige Steuerschaltung nach Fig. 4 sind in prinzipiell gleicher, möglicherweise etwas modifizierter Weise auch mit diesen Hohlkugeln 81 bzw. 82 verwendbar. Beide Hohlkugeln 81 und 82 bestehen jeweils aus zwei formgleichen, durch Kleben oder Schweißen zusammengefügten Kugelhalbschalen 81' bzw. 82' aus einem lichtdurchlässigen, vorzugsweise glasklarem Kunststoff oder aus Glas, die zusammengefügt jeweils eine Hohlkugel 81 bzw. 82 bilden.

Die in den Fig. 5 bis 8 dargestellte Hohlkugel 81 hat eine Innenfläche, die vollständig aus in allen Umfangsrichtungen lückenlos aneinander gereihten Planflächen 83 und 84 besteht. Dabei haben die Planflächen 83 die Form unter sich gleicher regelmäßiger, d.h. gleichseitiger, Fünfecke und die Planflächen 84 die Form unter sich gleicher, regelmäßiger, gleichseitiger Sechsecke, die alle als optische Reflexionsflächen benutzt werden können. Diese plygonalen Planflächen sind nach Art eines Polyeders zueinander angeordnet. Beim gezeichneten Ausführungsbeispiel sind insgesamt zwölf fünfeckige und acht sechseckige Planflächen vorgesehen, die den Hohlraum 85 der Hohlkugel 81 begrenzen. Dabei liegen die Ecken 86 sämtlicher Planflächen 83 und 84 auf einer in der Zeichnung in Phantomlinien dargestellten Hüllkugel 87, die jedoch praktisch nicht in Erscheinung tritt. Aus der Zeichnung ist auch erkennbar, daß jeweils benachbarte Planflächen 83, 84 eine gemeinsame Begrenzungskante 88 haben. Es sind auch andere Polyederarten, z.B. ein Oktaeder mit acht gleichseitigen Dreiecksflächen, ein Pentagon-Dodekaeder mit zwölf gleichseitigen Fünfecksflächen oder ein Ikosaeder mit zwanzig gleichseitigen Dreiecksflächen.
Diese Planflächen 83 und 84 dienen für einen von außen auf die Kugeloberfläche gerichteten Lichtstrahl 89 einer Reflexionslichtschranke 29 als Reflexionsflächen. Bei einer Drehbewegung der Hohlkugel 81 wird dieser Lichtstrahl 89 von diesen Planflächen 83, 84 in wechselnden Richtungen reflektiert und zwar so, daß er bei konstanter Drehgeschwindigkeit und Drehrichtung der Hohlkugel 81 periodisch auf den Empfänger der Reflexionslichtschranke 29 trifft und diesen zur Erzeugung einer periodischen Folge von Bewegungssignalen 20 veranlaßt. Die Verwertung dieser Bewegungssignale 20 erfolgt in der vorstehend beschriebenen Weise durch die in Fig. 4 dargestellte elektronische Steuerschaltung.
Durch die beschriebene Anordnung der als Reflexionsflächen dienenden Planflächen 83, 84 ist sichergestellt, daß bei jeder beliebigen Drehrichtung der als Tastorgan dienenden Hohlkugel 81 in der Reflexionslichtschranke regelmäßig Bewegungssignale erzeugt werden, weil der in Fig. 6 dargestellte Reflexionszustand, bei dem der Lichtstrahl 89 zumindest kurzzeitig zum Empfänger der Reflexionslichtschranke 29 reflektiert wird, während jeder Kugelumdrehung wenigstens zwei mal auftritt, da sich immer zwei gleiche Planflächen 83 und 84 in Parallellage diametral gegenüberliegen.

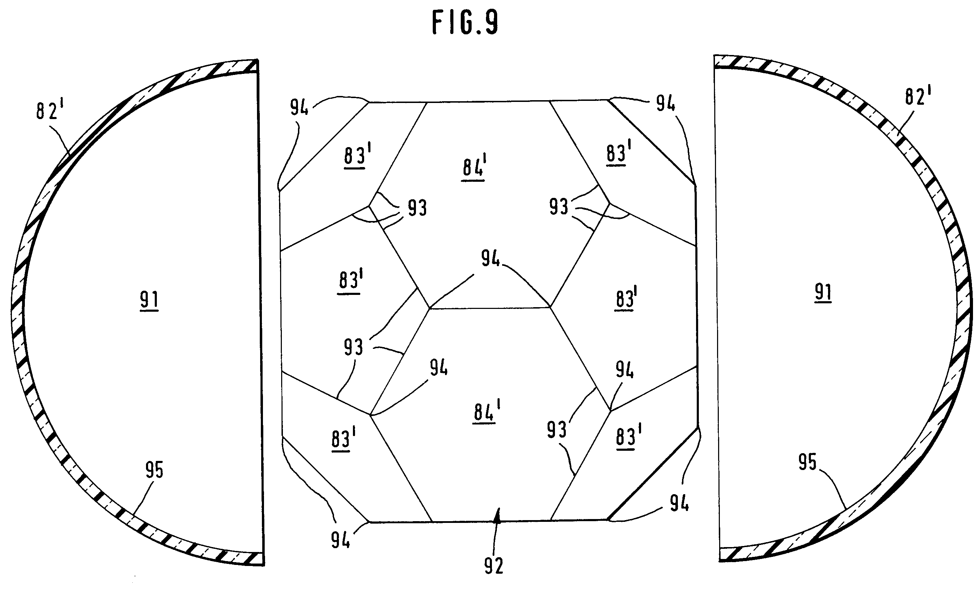

Die in den Fig. 9 bis 11 dargestellte Hohlkugel 82 besteht aus zwei lichtdurchlässigen, vorzugsweise glasklaren, formgleichen, durch Kleben oder Schweißen stirnseitig fest zusammengefügten Kugelhalbschalen 82', die überall die gleiche Wanddicke aufweisen und somit einen ebenfalls kugelförmigen Hohlraum 91 umschließen. In diesen Hohlraum 91 ist als Füllkörper 92 ein Polyeder eingesetzt, dessen Ecken 94 berührend an der kugeligen Innenfläche 95 der geschlossenen Hohlkugel 82 anliegen und jede Drehung der Hohlkugel 82 synchron mitmachen. Bei dem gewählten Ausführungsbeispiel entspricht die Außenform des Füllkörpers 92, exakt der Innenform des Hohlraums 85 der Hohlkugel 81. Der Füllkörper 92 ist außen mit zwölf regelmäßig oder gleichseitig fünfeckigen Planflächen 83' und mit acht gleichseitig sechseckigen Planflächen 84' versehen, die alle in der gleichen Weise wie die Planflächen 83 und 84 der Hohlkugel 81 als Reflexionsflächen für den Lichtstrahl 89 der Reflexionslichtschranke 29 dienen können. Auch diese Planflächen 83' und 84' sind jeweils paarweise durch eine gemeinsame Begrenzungskante 93 miteinander verbunden.
Wichtig dabei ist nur, daß diese Planflächen 83' und 84' so beschaffen sind, daß sie einen Lichtstrahl definiert reflektieren können. Dazu genügt es, wenn sie glatt sind; besser ist ihre Reflexionsfähigkeit natürlich, wenn sie verspiegelt sind. Dies gilt auch für die aus Innenflächen bestehenden Planflächen 83 und 84 der Hohlkugel 81. Der Füllkörper 92 kann aus jedem beliebigen festen Material bestehen, das die Bildung einer glatten reflexionsfähigen Oberfläche zuläßt.

Eine weitere Möglichkeit, auf einfache Weise Signalelemente oder Reflexionsflächen in einer aus den beiden Kugelhalbschalen 82' gebildeten Hohlkugel zu bilden, besteht darin, die kugelförmige Innenfläche 95 mit reflektierenden und nichtreflektierenden oder mit lichtdurchlässigen und lichtundurchlässigen, sphärischen Flächenabschnitten zu versehen, die in allen Umfangsrichtungen wechselweise aneinandergereiht sind. Auch solche Flächenabschnitte können in analoger Weise zu den beschriebenen Planflächen 83, 84 bzw. 83', 84' zur Erzeugung periodischer Bewegungsimpulse 20 in einer Lichtschranke (29) benutzt werden.

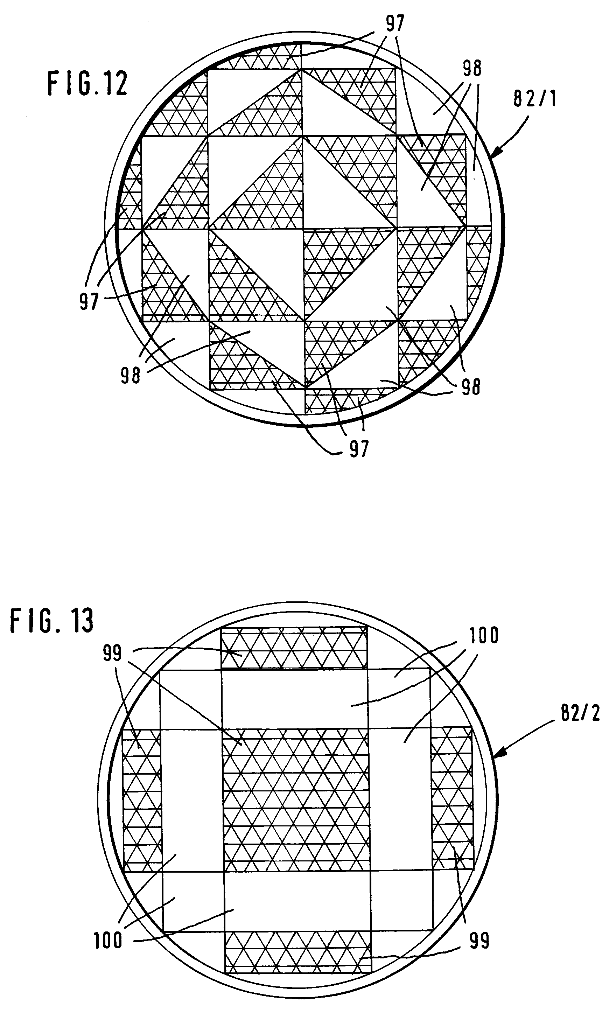

In den Fig. 12 und 13 sind zwei solche jeweils aus einem glasklaren Kunststoff bestehende Kugelhalbschalen 82/1 bzw. 82/2 in Stirnansicht dargestellt. Die Innenfläche der Kugelhalbschale 82/1 ist mit einer Vielzahl jeweils dreieckiger Flächenabschnitte 97 und 98 versehen, wobei die schraffierten Flächenabschnitte 97 verspiegelt und die nicht schraffierten Flächenabschnitte 98 lichtdurchlässig oder lichtabsorbierend sind.
Als zusätzliche Variationsmöglichkeit zeigt die Fig. 13 verspiegelte Flächenabschnitte 99 und lichtdurchlässige oder lichtabsorbierende Flächenabschnitte in Quadratform.

## Patentansprüche

1. Laufkontrollvorrichtung für über Transportbahnen bewegte, mit einer ebenen, mechanisch abtastbaren Fläche versehene Gegenstände, insbesondere für Papierbogen oder -bahnen, textile Stofflagen oder Stoffbahnen, bei der eine Tasteinrichtung ein drehbar gelagertes, auf der abtastbaren Fläche des bewegten Gegenstandes aufliegendes und von diesen in Rotation versetztes Tastorgan aufweist, das mit Signalelementen versehen ist, welche durch ihre Drehbewegungen in einem stillstehenden elektronischen Signalgeber elektronische Bewegungssignale erzeugen,
**dadurch gekennzeichnet**,
das Tastorgan aus einer in einem ortsfesten Führungskäfig (7) in allen Richtungen frei drehbaren und vertikal beweglichen Kugel (8, 81, 82, 81', 82') besteht, die mit innerhalb ihrer Außenfläche angeordneten, sich über begrenzte Flächenabschnitte erstreckenden, signalgebenden Signalelementen (12, 28. 84, 84, 83', 84', 97, 99) versehen ist, die wechselweise mit nicht signalgebenden Flächenabschnitten (99, 100) in Umfangsrichtung der Kugel (8, 81, 82, 81', 82') aneinander gereiht sind und die sich unabhängig von der Bewegungsrichtung der abgetasteten Gegenstände (3) an dem elektronischen Signalgeber (13, 29) in Bewegungssignale (20) erzeugender Weise vorbei bewegen.

2. Laufkontrollvorrichtung nach Anspruch 1, dadurch gekennzeichnet, daß das Tastorgan aus einer Kugel (8) mit ungleicher Masseverteilung besteht, die in einem Führungskäfig (7) frei drehbar geführt ist und die mindestens ein Signalelement (12, 28) aufweist, das in der Drehebene der größten Masseanhäufung der Kugel (8) angeordnet ist und daß der Signalgeber (13) auf der dem Auflagepunkt (19) der Kugel (8) diametral gegenüberliegenden Seite angeordnet und in dieser Drehebene radial auf die Kugel (8) gerichtet ist.

3. Laufkontrollvorrichtung nach Anspruch 2, dadurch gekennzeichnet, daß die Masseanhäufung in Bezug auf die quer zur Drehebene der Kugel (8) verlaufende Drehachse (10) ausgewuchtet ist.

4. Laufkontrollvorrichtung nach Anspruch 2 oder 3, dadurch gekennzeichnet, daß die Kugel (8) zur Erzeugung einer ungleichen Masseverteilung mit Materialeinschlüssen oder Materialeinbettungen (12) versehen ist, deren Dichte größer ist als die Dichte Materials der restlichen Kugel.

5. Laufkontrollvorrichtung nach Anspruch 3 oder 4, dadurch gekennzeichnet, daß das Material, dessen Dichte größer ist als die Dichte des Materials der restlichen Kugel (8), in eine Umfangsnut (15) der Kugel (8) eingebettet ist.

6. Laufkontrollvorrichtung nach Anspruch 5, dadurch gekennzeichnet, daß die Umfangsnut (15) in einer Mittelpunktsebene der Kugel (8) verläuft.

7. Laufkontrollvorrichtung nach einem der Ansprüche 2 bis 5, dadurch gekennzeichnet, daß die Kugel (8) zur Erzeugung einer ungleichen Masseverteilung mit mehreren in einer Mittelpunktsebene angeordneten radialen Vertiefungen (12') mit gleichen Winkelabständen versehen ist, die mit dem Material (26) der größeren Dichte gefüllt sind.

8. Laufkontrollvorrichtung nach einem der Ansprüche 2 bis 7, dadurch gekennzeichnet, daß die Materialeinschlüsse bzw. Materialeinbettungen (12) mit der größeren Dichte ferromagnetisch sind und der Signalgeber (13) eine Induktionsspule (29) aufweist.

9. Laufkontrollvorrichtung nach Anspruch 4 oder 5, dadurch gekennzeichnet, daß in Vertiefungen (12') der Kugel (8) Magnetelemente (12) angeordnet sind, welche sowohl die Signalelemente als auch die Einbettungen mit der größeren Dichte bilden, und daß der Signalgeber (13) mit einer Induktionsspule versehen ist.

10. Laufkontrollvorrichtung nach Anspruch 2 oder einem der Ansprüche 3 bis 7, dadurch gekennzeichnet, daß die Signalelemente aus Oberflächenabschnitten (28) der Kugel (8) bestehen, deren Reflexionsfähigkeit sich von derjenigen restlichen Kugeloberfläche unterscheidet, und daß der Signalgeber (13) eine radial auf die Kugel (8) ausgerichtete Reflexionslichtschranke (29) aufweist.

11. Laufkontrollvorrichtung nach Anspruch 1, dadurch gekennzeichnet, daß das Tastorgan eine aus einem lichtdurchlässigen Stoff, insbesondere glasklarem Kunststoff, bestehende Hohlkugel (81, 82, 81', 82') ist, in der als Signalelemente mehrere unterschiedlich reflektierende Reflexionsflächen (83, 84, 83', 84', 97, 99) angeordnet sind, die in allen Drehrichtungen der Hohlkugel (81, 82, 81', 82') in wechselnder Folge aneinandergereiht sind und einen von außen auf die Kugeloberfläche gerichteten Lichtstrahl (89) einer Reflexionslichtschranke (29) unterschiedlich reflektieren.

12. Laufkontrollvorrichtung nach Anspruch 2, dadurch gekennzeichnet, daß jeweils zwischen zwei verspiegelten Reflexionsflächen (97, 98) ein nicht verspiegelter Flächenabschnitt (98, 100) angeordnet ist.

13. Laufkontrollvorrichtung nach Anspruch 2, dadurch gekennzeichnet, daß die Reflexionsflächen aus Planflächen (83, 84, 83', 84') regelmäßiger Vielecke (Polygone) bestehen.

14. Laufkontrollvorrichtung nach Anspruch 2 oder 11, dadurch gekennzeichnet, daß die regelmäßigen Vielecke die Innenfläche einer Hohlkugel (81) oder die Außenfläche eines im Hohlraum einer Hohlkugel angeordneten polyerderartigen Füllkörpers (92) bilden.

15. Laufkontrollvorrichtung nach einem der Ansprüche 2 12 oder 13, dadurch gekennzeichnet, daß die verspiegelten Reflexionsflächen (97, 99) jeweils kugelförmig gewölbt sind.

16. Laufkontrollvorrichtung nach einem der Ansprüche 2 oder 12 bis 14, dadurch gekennzeichnet, daß die Planflächen (83, 84, 83', 84') jeweils aus mehreren Fünf- und Sechsecken bestehen, die jeweils durch eine gemeinsame Begrenzungskante (88) miteinander verbunden sind.

17. Laufkontrollvorrichtung nach einem der Ansprüche 2 oder 12 bis 15, dadurch gekennzeichnet, daß der Hohlraum der Hohlkugel (81) von insgesamt acht unter sich gleich großen regelmäßigen Sechsecken (84) und zwölf unter sich ebenfalls gleich großen regelmäßigen Fünfecken (83) begrenzt ist.

18. Laufkontrollvorrichtung nach einem der Ansprüche 2 oder 12 bis 16, dadurch gekennzeichnet, daß sämtliche Planflächen (83, 84, 83', 84') der Vielecke verspiegelt sind.

19. Laufkontrollvorrichtung nach einem der Ansprüche 2 oder 11 bis 17, dadurch gekennzeichnet, daß die Hohlkugel (81, 82) aus zwei fest zusammengefügten Halbkugelschalen (81', 82', 82/1, 82/2) besteht.
